# EUROPEAN PATENT APPLICATION

(11) **EP 4 509 894 A1**
(43) Date of publication of application: **19.02.2025**
(21) Application number: 24194797.7
(22) Date of filing: 15.08.2024
(51) Int. Cl.: G02B 6/44

(54) **OPTICAL FIBRE CABLE AND METHOD FOR MANUFACTURING AN OPTICAL FIBRE CABLE**

(30) Priority: 17.08.2023 NL 2035623
(71) Applicant: B.V. Twentsche Kabelfabriek, 7481 KJ Haaksbergen (NL)
(72) Inventor: BRESSER, Onno Roland, 7481 KJ HAAKSBERGEN (NL); ZHANG, Li, 7481 KJ HAAKSBERGEN (NL)
(74) Representative: Melchior, Robin

(57) **Abstract**

The invention relates to an optical fibre cable comprising a central element extending in an axial direction of the optical fibre cable, microtubes stranded around the central element along respective helical paths, each helical path having a laylength, and optical fibres bundled in subsets, each subset being contained in a respective microtube, wherein each microtube defines an inner circumference that encloses an inner area perpendicular to the helical path of the respective microtube, wherein the optical fibres, for each subset, define an aggregate cross-sectional area of the respective subset perpendicular to the helical path of the respective microtube, characterized in that the laylength is at least one-hundred millimeters, and the aggregate cross-sectional area of the subset of optical fibres in at least one microtube of the microtubes covers at least seventy percent of the inner area enclosed by the inner circumference of the at least one microtube of the plurality of microtubes.

## Description

### BACKGROUND

The invention relates to an optical fibre cable and a method for manufacturing an optical fibre cable.

Known optical fibre cables typically contain a large number of optical fibres, for example 144 or 192 optical fibres, loosely contained in bundles of 24 or 36 optical fibres in individual tubes or microtubes. The optical fibres are loosely contained when the total cross-sectional area of the optical fibres is less than seventy percent compared to a the inner cross sectional area of the microtube. The microtubes are stranded around a central element along respective helical paths. Each helical path has a laylength. These known optical fibre cables are known as 'loose-tube' optical fibre cables.

The general trend for 'loose-tube' optical fibre cables is to choose a short laylength that maximizes the free space between the bundles of optical fibres and their respective microtubes, as contact between the optical fibres and the irregular surface of the microtubes is known to cause micro-bending and increased signal attenuation.

In particular, when the overall cable length changes as a result of temperature variations and/or pulling forces, a short laylength in combination with the loose fitting of the bundle of optical fibres inside the microtube provides the bundle of optical fibres with sufficient freedom of movement to move radially within the microtube, without immediately colliding with said microtube. Typically, a laylength is chosen to be sixty millimeters or less.

### SUMMARY OF THE INVENTION

For the known `loose-tube' optical fibre cable, it has been observed that overall performance of the optical fibre cable improves with a shorter laylength. However, a disadvantage of this short laylength is that it introduces a large amount of bending, a tight bending radius and/or mechanical stresses.

Moreover, when the optical fibre cable contracts in length under cold temperatures, a relatively long length of the optical fibres causes the bundle of optical fibres to move radially outwards against the microtube and the optical fibres may start to buckle, thereby causing micro-bending, increased signal attenuation and damage to the fibres, which the short laylength intends to prevent in the first place.

In particular, KR 2022 0138307 A discloses an optical cable with optical fibres grouped in tube members such that they occupy only between forty to seventy percent of the inner cross-sectional area of the tube member. The laylength is relatively long, between two-hundred-and-forty to eight-hundred millimeters. Notably, KR 2022 0138307 A teaches that when the total cross-sectional area of the optical fibres is larger than seventy percent compared to the inner cross-sectional area of the tube member, stress or damage to the optical fibre may occur by contraction of the tube member in the cooling process after high-temperature extrusion of the tube member or sheath member or cable jacket.

Consequently, based on the teaching of KR 2022 0138307 A and the general trend in the market, one is urged to stay away from longer laylengths in combination with high density packing towards the upper end of the specified ranges.

US 2020/0142144 A1 discloses a ribbon cable. A ribbon cable is very different from a microtube optical fibre cable with fibre bundled in a circle-like packing in that the fibres in a ribbon are not 'bundled'. Instead, the fibres are glued together while aligned side-by-side in a single row in a single, flat plane. As such, the fibres in a ribbon cable behave very differently to optical fibres that are free to move relative to each other in a bundle.

It is an object of the present invention to provide an optical fibre cable and a method for manufacturing an optical fibre cable, wherein the signal attenuation of the optical fibre cable can be reduced or an increase in signal attenuation can be prevented.

According to a first aspect, the invention provides an optical fibre cable comprising a central element extending in an axial direction of the optical fibre cable, a plurality of microtubes stranded around the central element along respective helical paths, each helical path having a laylength, and a plurality of optical fibres bundled in subsets, each subset being contained in a respective microtube of the plurality of microtubes, wherein each microtube defines an inner circumference that encloses an inner area perpendicular to the helical path of the respective microtube, wherein the optical fibres, for each subset, define an aggregate cross-sectional area of the respective subset perpendicular to the helical path of the respective microtube, characterized in that the laylength is at least one-hundred millimeters, and the aggregate cross-sectional area of the subset of optical fibres in at least one microtube of the plurality of microtubes covers at least seventy percent of the inner area enclosed by the inner circumference of the at least one microtube of the plurality of microtubes.

Contrary to the market trend of using `loose-tube' optical fibre cables with a relatively short laylength, the Applicant unexpectedly found that by significantly increasing the laylength, the bending radius of the optical fibres can be reduced, as a result of which the optical fibres can be packed much more tightly into the microtube. In particular, the shape of the individual optical fibres, considered in a cross section perpendicular to the axial direction of the optical fibre cable, is much rounder compared to the more oval cross sectional shape of the optical fibres at the shorter laylength of the known optical fibre cable.

Surprisingly, it was found that the tight packing can prevent that the optical fibres buckle when the length of the optical fibre cable contracts at colder temperatures. Hence, micro-bending and/or an increase in signal attenuation under these conditions can be reduced.

The tight packing of the optical fibres also better fixates the position of the optical fibres within the bundle, which effectively reduces peaks in contact forces between the optical fibres or at least makes the contact between the optical fibres more constant along the length of the optical fibre cable. This can further reduce micro-bending and/or prevent increases in signal attenuation.

Because of the tight packing, the variation in axial stress between the optical fibres located on the outside of the bundle and the optical fibres located on the inside of the bundle within the microtube may increase, potentially beyond the acceptable limits of axial stress to which optical fibres may be exposed over a long period of time. However, at the same time, the longer laylength reduces the amount of bending that optical fibres are subjected to along the respective helical paths, thereby reducing the amount of axial stress in the optical fibres during the stranding of the microtubes and thereby potentially further reducing micro-bending and/or prevent increases in signal attenuation.

Moreover, surprisingly, it was found that the cable with tightly packed bundle of optical fibres was still relatively flexible and can still meet industry standards for mechanical properties of the optical fibre cable as a whole.

Finally, using a longer laylength can significantly reduce the length of the optical fibres used per length unit of the optical fibre cable, which can further reduce signal attenuation over the entire length of the optical fibre cable, but may additionally reduce material consumption and potentially also speed up the manufacture of the optical fibre cable.

Taking all of the above advantages into account, it was found that the optical fibre cable according to the present invention may, despite the prejudices against a longer laylength, actually outperform the known optical fibre cable with the shorter laylength, in terms of signal attenuation.

In an embodiment the laylength is at least one-hundred-and-ten millimeters, and preferably at least one-hundred-and-thirty millimeters. This longer laylength can further increase the aforementioned advantages.

In an embodiment the aggregate cross-sectional area covers at least seventy-two percent, and preferably at least seventy-five percent of the inner area. In this way, the aforementioned advantages can be further increased.

In an embodiment the inner circumference of the at least one microtube is circular or substantially circular.

In an embodiment the inner circumference defines an inner diameter, wherein the inner diameter of the at least one microtube is less than or equal to 1,05 millimeters, preferably less than or equal to 1,03 millimeters, and more preferably less than or equal to 1,02 millimeters. Reducing the inner diameter of the microtubes can ensure a tight fit between the microtube and the multiple optical fibres.

In an embodiment each optical fibre of the plurality of optical fibres has a fibre diameter of equal to or less than two-hundred micrometer, and preferably equal to or less than one-hundred-and-eighty micrometer.

In an embodiment each subset of optical fibres comprises twenty-four or at least twenty-four optical fibres. By utilizing twenty-four or more optical fibres in a microtube, the ratio between the inner area and the aggregate cross-sectional area can be maximized, while the flexibility of the microtube can be maintained, the axial movability can be minimized, as well as optimizing production of the cable and achieving desired cable data capacity.

In an embodiment the subset of optical fibres in the at least one microtube are arranged in a circle packing, preferably wherein the circle packing has an orientation relative to the at least one microtube that remains constant of substantially constant along the respective helical path. The circle packing is different from a ribbon-like packing in a ribbon cable. Moreover, when the subset of optical fibres remains in a constant orientation relative to the respective microtube, the optical fibres are not being twisted before or during insertion, and lay untwisted or substantially untwisted in the microtube. In this way, the optical fibres are less deformed to an elliptical or oval shape and, as a result, a higher percentage of the inner area can be covered by the aggregate cross-sectional area.

In an embodiment the plurality of microtubes is stranded around the central element using SZ stranding. By utilizing SZ stranding of the microtubes the flexibility of the optical fibre cable can be maximized while minimizing the axial stresses caused by a helical stranding on the multiple optical fibres.

According to a second aspect, the invention provides a method for manufacturing a optical fibre cable according to any one of the preceding embodiments, wherein the method comprises the steps of:
- inserting the subset of optical fibres into the at least one microtube, wherein the aggregate cross-sectional area of the subset of optical fibres in the at least one microtube covers at least seventy percent of the inner area enclosed by the inner circumference of the at least one microtube; and
- stranding the plurality of microtubes around a central element with a laylength of at least one-hundred millimeters.

The method relates to the manufacture of the optical fibre cable according to the first aspect of the invention. Therefore, the technical advantages and benefits of the method for manufacturing an optical fibre cable will be the same as those for the optical fibre cable, and will not be repeated hereafter.

In an embodiment the laylength is at least one-hundred-and-ten millimeters, and preferably at least one-hundred-and-thirty millimeters.

In an embodiment the aggregate cross-sectional area covers at least seventy-two percent, and preferably at least seventy-five percent of the inner area.

In an embodiment the subset of optical fibres are untwisted or substantially untwisted relative to each other when feeding the subset of optical fibres into the at least one microtube.

In an embodiment the plurality of microtubes are stranded around the central element using SZ stranding.

In an embodiment the optical fibre cable further comprises an outer sheath, wherein the method further comprises the step of:
- inserting the plurality of microtubes and the central element into the outer sheath.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows a cross-section of an optical fibre cable according to a first exemplary embodiment of the invention;
figure 2 shows an isometric view of the optical fibre cable according to figure 1;
figure 3 shows a perspective view of the optical fibre cable according to figure 1;
figure 4 shows a maximal circle packing for twenty-four circles;
figure 5 shows a maximal circle packing for thirty-six circles; and
figure 6 shows a cross-section of an alternative optical fibre cable according to a second exemplary embodiment of the invention.

### DETAILED DESCRIPTION OF THE INVENTION

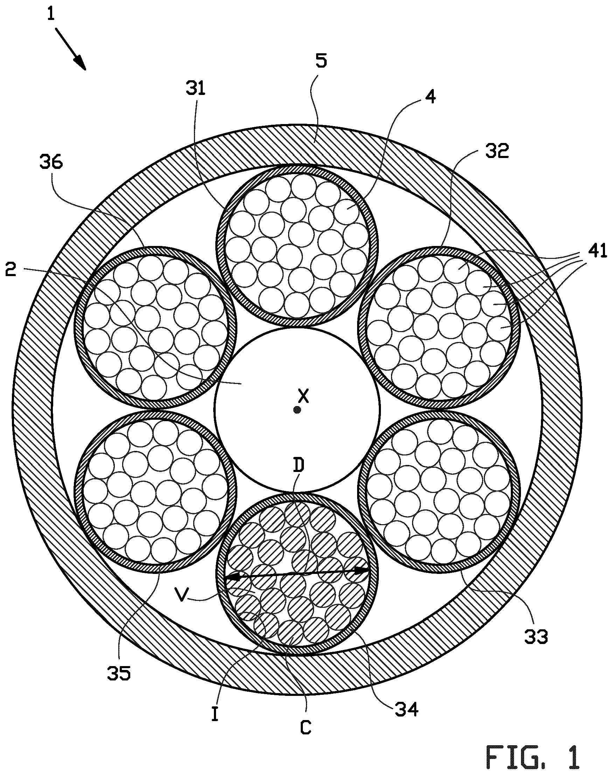

Figures 1, 2 and 3 show an optical fibre cable 1, in particular a tube or a microtube optical fibre cable 1, according to a first exemplary embodiment of the invention. The optical fibre cable 1 is used in a wide array of fields, such as telecommunication, long distance telecommunication, providing a high-speed data connection between different parts of a building, or to connect servers within data centers or server parks.

As shown in figure 1, the optical fibre cable 1 comprises a core, a wire, a support, or a central element 2 extending along a central axis X in a longitudinal direction or an axial direction A of the optical fibre cable 1.

The central element 2 serves to add rigidity to a construction of the optical fibre cable 1. The central element 2 can belong to any of, but is not limited to, a set of: a metal wire, metal wire bundle, a plastic wire, or a tube, and preferably comprises a glass-reinforced plastic wire. The central element 2 may also be formed by another, smaller inner cable, in which case the microtubes may be stranded as an additional layer around the outer sheathing of the inner cable. The central element 2 might also be absent.

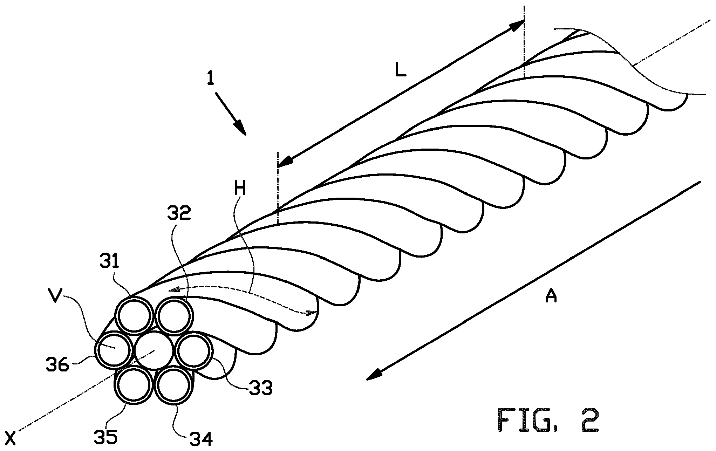

As shown in figure 2, the optical fibre cable 1 further comprises a plurality of conduits, tubes, microconduits or microtubes 31-36 wrapped or stranded around the central element 2 and/or the central axis X. In particular, the plurality of microtubes 31-36 is stranded around the central element 2 and/or the central axis X along respective helical paths H. In this example, the microtubes 31-36 are tightly wrapped or stranded around the central element 2, i.e. with minimal spacing and/or in direct contact with said central element 2. As such, the microtubes 31-36 and the central element 2 together form a tight package.

In this example, each helical path H extends with a constant pitch in the same direction around or about the central axis X. Alternatively, the helical path H may comprises helical subsections extending in opposite directions, according to a stranding method also known as 'SZ stranding' .

Each helical path H or helical subsection has a laylength L. The laylength L is defined as the distance over which a respective helical path H of one of the microtubes 31-36 completes one or a single revolution, winding or stranding around the central element 2 and/or the central axis X. For SZ stranding, the laylength L is defined as the distance over which a helical subsection of a respective helical path H of one of the microtubes 31-36 completes one or a single revolution winding or stranding around the central element 2 and/or the central axis X.

The laylength L is at least one-hundred millimeters. Preferably, the laylength L is at least one-hundred-and-ten millimeters, and preferably at least one-hundred-and-thirty millimeters. Preferably, the laylength L is less than five-hundred millimeters, preferably less than three-hundred millimeters, more preferably less than two-hundred millimeters, and even more preferably less than one-hundred-and-ninety millimeters.

As shown in figure 1, each microtube 31-36 defines an inner circumference I. Considered in a plane perpendicular to the helical path H of the respective microtube 31-36, said inner circumference I is round and has an inner diameter D. In this example, the inner diameter D of each microtube 31-36 is less than or equal to 1,05 millimeters, preferably less than or equal to 1,03 millimeters, and more preferably less than or equal to 1,02 millimeters.

Note that, in figure 1, the cross sections of the microtubes 31-36 are shown in a plane perpendicular to the central axis X. It is however submitted that, because of the relative large laylength L, these cross sections almost correspond to or are only slightly different when taken in a plane perpendicular to the helical path H of the respective microtube 31-38. Hence, for the purpose of explaining the invention, the cross sections of the microtubes 31-36 as shown in figure 1 may be considered similar to the cross sections of the same microtubes 31-36 taken in the plane perpendicular to the helical path H.

As further shown in figure 1, each microtube 31-36 encloses an inner area V in the plane perpendicular to the respective helical path H.

As shown in figure 1, the optical fibre cable further comprises an outer casing, outer liner, encasing, outer cover, outer jacket, or outer sheath 5 for encompassing, surrounding, containing, enveloping, or encasing the plurality of microtubes 31-36 and the central strengthening element 2.

The optical fibre cable 1 further comprises a plurality of optical fibres 4, in particular glass fibres. The optical fibres 4 preferably are of the type single mode optical fibre. However, the optical fibre can be any type of optical fibre belonging to, but not limited to, the set of multi-mode optical fibre, single mode fibre or multi-core single mode fibre. The material of the optical fibre 4 is preferably glass, quartz, or polymer such as acrylic. Each of the optical fibres 4 can further comprise elements such as cladding and/or coloring. In this example, the optical fibres 4 have a quartz core or quartz cladding with at least one dopant, preferably Germanium oxide, in the core to increase the refractive index, and/or at least one dopant, preferably Fluorine, in the cladding, to reduce the refractive index.

In this example, each optical fibre 4 of the plurality of optical fibres 4 has a fibre diameter of equal to or less than two-hundred micrometer, and preferably equal to or less than one-hundred-and-eighty micrometer.

The plurality of optical fibres 4 is bundled in subsets 41. In the context of the present invention, the term 'bundled' is to be interpreted as the act of wrapping, containing or rolling up the optical fibres 4 in a generally round, non-linear, non-planar, or randomly formed package, more specifically in a circle packing, having no particular direction in any cross-sectional direction. The optical fibres 4 are received in the respective microtube 31-36 without glue or adhesive, and/or without any orientation relative to a longitudinal plane. Notably, the act of `bundling' optical fibres 4 in a respective microtube 31-36 is very different from confining an array of fibres with an adhesive side-by-side in a row in a single, flat plane in a ribbon like structure. As such, the microtube optical fibre cable 1 according to the present invention can not be considered to be equivalent to a ribbon cable.

Each subset is contained in a respective microtube 31-36. Each subset 41 of optical fibres 4 comprises, in this exemplary embodiment, twenty-four optical fibres 4. The plurality of microtubes 31-36 comprises, in this exemplary embodiment, six microtubes 31-36. The number of optical fibres 4 in the subset 41 of optical fibres 4 is not limited to twenty-four, neither is the number of microtubes 31-36 limited to six. Alternative configurations with twelve, sixteen or thirty-six optical fibres 4 and/or with less or more than six microtubes 31-36 are also envisioned.

Depending on the configuration, the inner diameter D of each microtube may be different, for example less than 1,00 millimeters, less than 0,90 millimeter or even less than 0,75 millimeters, in combination with a smaller number of optical fibres, for example when using sixteen or twelve optical fibres per microtube.

The optical fibres 4, for each subset 41, define a sum of, a complex, a total or an aggregate cross-sectional area C of the respective subset 41 perpendicular to the helical path H of the respective microtube 31-36. Every optical fibre 4 of the optical fibres 4 has an individual cross-section in every plane perpendicular to the respective helical path H of the optical fibre 4. The aggregate cross-sectional area C is defined as a summation of the individual cross-section of every optical fibre 4 within the subset 41 within one microtube 31-36 at one plane perpendicular to the helical path, i.e. the aggregate cross-sectional area C. The aggregate cross-sectional area C does not include the spaces or rest space between the optical fibres 4.

The aggregate cross-sectional area C, depending on the chosen configuration, covers at least seventy percent, preferably, at least seventy-two percent, and more preferably at least seventy-five percent of the inner area V. In other words, the ratio between the aggregate cross-sectional area C and the inner area V is at least 0,7, preferably at least 0,72 and most preferably at least 0,75.

Within the optical fibre cable 1, the subset 41 of optical fibres 4 in the at least one microtube 31-36 is configured in a circle packing. The circle packing is an arrangement of how each optical fibre 4 is positioned inside the at least one microtube 31-36. The circle packing has an orientation relative to the respective microtube 31-36. Said orientation is constant or substantially constant along the length of the respective microtube 31-36.

Put differently, the subset 41 of optical fibres 4 are untwisted or substantially untwisted relative to each other when feeding the subset 41 of optical fibres 4 into the at least one microtube 31-36.

In a further alternative embodiment, the plurality of microtubes 31-36 is stranded around the central strengthening element 2 using SZ stranding.

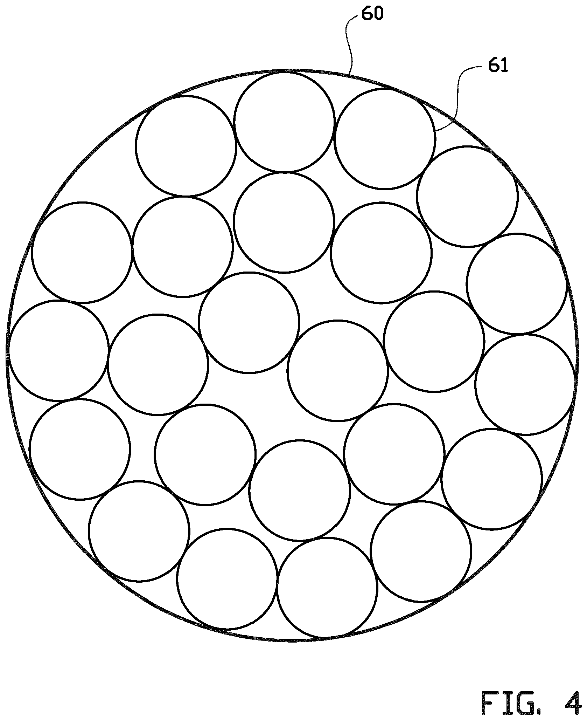

Figure 4 shows a maximal circle packing in a circle or circle packing for twenty-four inner circles 61, which corresponds to the packing of the subset 41 of optical fibres 4 in at least one of the microtubes 31-36. A maximal circle packing is achieved if the packing density is maximal or close to maximal, i.e., when the surface of the outer circle 60 which is not covered by inner circles 61 is minimized.

When taking a plane perpendicular to the respective helical path H of the at least one of the microtubes 31-36 in figure 2, each optical fibre 4 in the respective subset 41 defines the individual cross-section, and the microtube 31-36 defines the inner circumference I. This individual cross-section defines an individual circumference for each optical fibre 4 of the subset 41. The individual circumference corresponds to the inner circle 61 of the circle packing in figure 4. The inner circumference I corresponds to the outer circle 60 of the circle packing in figure 4.

The best, known packing density for twenty-four inner circles is found to be approximately seventy-five percent. In this field of mathematics, this best, known packing density for twenty-four inner circles is believed to be approximately equal to the maximal packing density. The X and Y coordinates for one such maximal packing for twenty-four circles in a circle of radius one centered around the origin is given as follows:

| N | X | Y |
|---|---|---|
| 1 | 0.1177 | -0.8146 |
| 2 | -0.2352 | -0.7887 |
| 3 | 0.4489 | -0.6899 |
| 4 | -0.5447 | -0.6171 |
| 5 | 0.0233 | -0.4735 |
| 6 | 0.6971 | -0.4376 |
| 7 | -0.3093 | -0.3528 |
| 8 | 0.3545 | -0.3488 |
| 9 | -0.7534 | -0.3313 |
| 10 | 0.8164 | -0.1045 |
| 11 | 0.1560 | -0.0559 |
| 12 | -0.4733 | -0.0392 |
| 13 | -0.8229 | 0.0157 |
| 14 | 0.4954 | 0.0444 |
| 15 | -0.1544 | 0.1141 |
| 16 | 0.7848 | 0.2480 |
| 17 | 0.3072 | 0.3572 |
| 18 | -0.7403 | 0.3598 |
| 19 | -0.3870 | 0.3808 |
| 20 | -0.0344 | 0.4634 |
| 21 | 0.6081 | 0.5546 |
| 22 | -0.3717 | 0.7343 |
| 23 | 0.3191 | 0.7587 |
| 24 | -0.0290 | 0.8225 |

where N is each distinguishable inner circle 61 and X and Y are the respective X coordinate and the Y coordinate. These coordinates are rounded to four decimals.

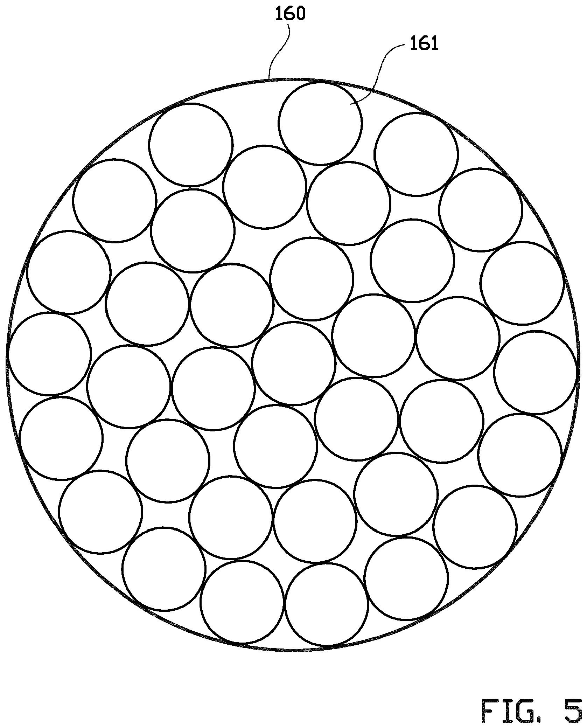

Similar to figure 4, figure 5 shows a maximal circle packing for thirty-six inner circles. The best known packing density for a circles-in-a-circle packing of thirty-six inner circles is approximately seventy-nine percent. In this field of mathematics, this best known packing density for twenty-four inner circles is believed to be approximately equal to the maximal packing density. The X and Y coordinates for one such maximal packing for thirty-six circles in a circle of radius one centered around the origin is given as follows:

| N | X | Y |
|---|---|---|
| 1 | 0.1190 | -0.8434 |
| 2 | -0.1772 | -0.8331 |
| 3 | 0.4009 | -0.7516 |
| 4 | -0.4520 | -0.7219 |
| 5 | 0.6342 | -0.5687 |
| 6 | 0.0773 | -0.5499 |

| | | |
|---|---|---|
| 7 | -0.2190 | -0.5388 |
| 8 | -0.6721 | -0.5233 |
| 9 | 0.3591 | -0.4581 |
| 10 | -0.4390 | -0.3401 |
| 11 | 0.7906 | -0.3169 |
| 12 | -0.0611 | -0.2877 |
| 13 | -0.8107 | -0.2613 |
| 14 | 0.5180 | -0.2006 |
| 15 | 0.2216 | -0.1955 |
| 16 | -0.2814 | -0.0891 |
| 17 | -0.5776 | -0.0781 |
| 18 | 0.8514 | -0.0267 |
| 19 | 0.0006 | 0.0022 |
| 20 | -0.8510 | 0.0366 |
| 21 | 0.5787 | 0.0895 |
| 22 | 0.2823 | 0.0947 |
| 23 | -0.2172 | 0.2032 |
| 24 | -0.5136 | 0.2113 |
| 25 | 0.8035 | 0.2828 |
| 26 | 0.0644 | 0.2957 |
| 27 | -0.7869 | 0.3260 |
| 28 | 0.4183 | 0.3639 |
| 29 | -0.3517 | 0.4674 |
| 30 | 0.6579 | 0.5410 |
| 31 | 0.1892 | 0.5646 |
| 32 | -0.6275 | 0.5760 |
| 33 | -0.1009 | 0.6254 |
| 34 | 0.4326 | 0.7337 |
| 35 | -0.3597 | 0.7712 |
| 36 | 0.0969 | 0.8463 |

where N is each distinguishable circle and X and Y are the respective X coordinate and the Y coordinate. These coordinates are rounded to four decimals.

For any circle packing, the packing density has an upper bound of ninety-one percent. This upper bound is given by the most efficient way to pack a plane with circles. Specifically, the most efficient way to pack a plane with circles is called hexagonal packing. The upper bound is then found by taking a repetitive tile when hexagonally packing a Euclidean plane with circles and comparing the covered area in the tile, by the total tile area. One such repetitive tile could be triangular of hexagonal.

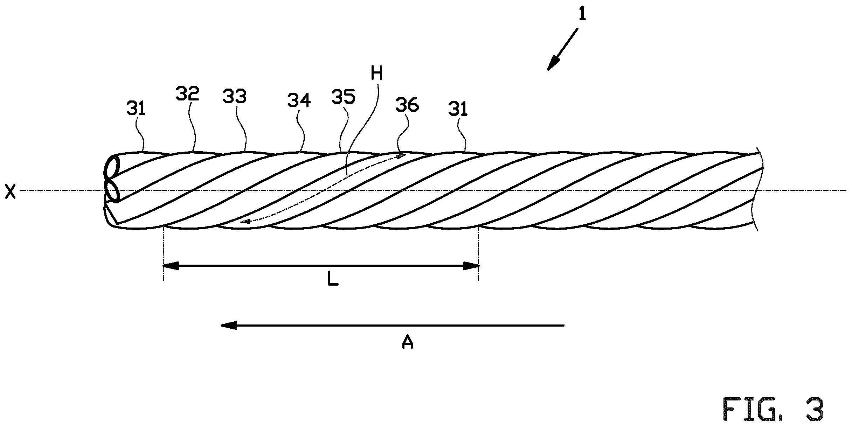

As can be seen in figure 1, the packing of the optical fibres 4 inside the microtube 31-36 is the same or substantially the same packing as the maximal circle packing for twenty-four circles as in figure 3. The optical fibres 4 inside the microtube 31-36 are maximally or near-maximally packed. Achieving a maximal or near-maximal packing also reduces the radial movement of the optical fibres. Due to the high friction of the optical fibres 4 being closely packed, the axial movability of the optical fibres is also reduced to near zero for ordinary stresses and use. Furthermore, the maximal or near-maximal packing reduces the deformation of the optical fibre 4. The optical fibre 4 therefore remains substantially circular, as opposed to elliptical or oval.

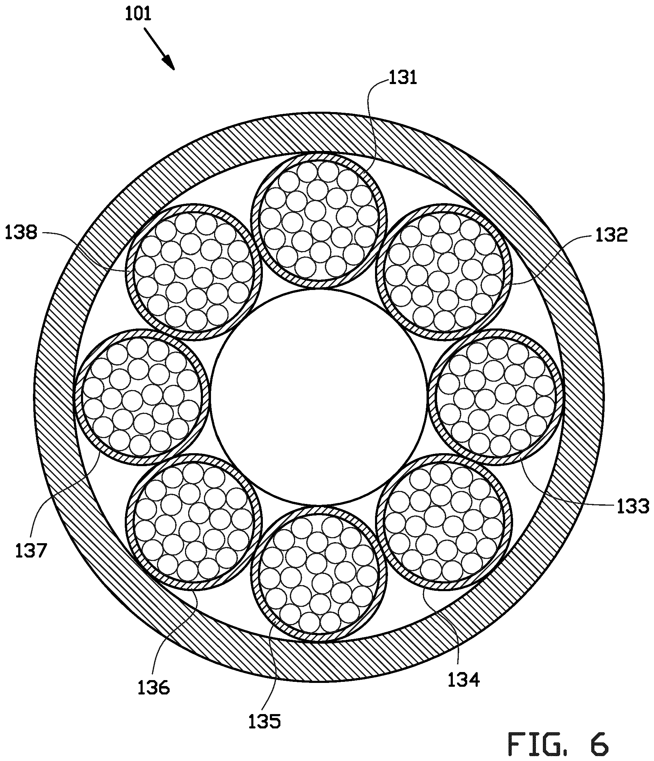

Figure 6 shows an alternative optical fibre cable 101 according to a second exemplary embodiment of the invention that only differs from the previously discussed optical fibre cable 1 in that the number of microtubes 131-138 is eight.

A method for obtaining, producing or manufacturing the optical fibre cable 1 according to figures 1-3 will now be briefly elucidated.

Manufacturing the optical fibre cable 1 comprises the steps of: inserting or filling, introducing, injecting, the subset 41 of optical fibres 4 into the at least one microtube 31-36; and wrapping, winding or stranding the plurality of microtubes 31-36 around the central strengthening element 2 with the laylength L of at least one-hundred millimeters. Optionally, the method further comprises the step of inserting the plurality of microtubes 31-36 and the central strengthening element 2 into the outer sheath 5.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Optical fibre cable (1) comprising a central element (2) extending in an axial direction (A) of the optical fibre cable (1), a plurality of microtubes (31-36) stranded around the central element (2) along respective helical paths (H), each helical path (H) having a laylength (L), and a plurality of optical fibres (4) bundled in subsets (41), each subset (41) being contained in a respective microtube (31-36) of the plurality of microtubes (31-36), wherein each microtube (31-36) defines an inner circumference (I) that encloses an inner area (V) perpendicular to the helical path (H) of the respective microtube (31-36), wherein the optical fibres (4), for each subset (41), define an aggregate cross-sectional area (C) of the respective subset (41) perpendicular to the helical path (H) of the respective microtube (31-36), **characterized in that** the laylength (L) is at least one-hundred millimeters, and the aggregate cross-sectional area (C) of the subset (41) of optical fibres (4) in at least one microtube (3) of the plurality of microtubes (31-36) covers at least seventy percent of the inner area (V) enclosed by the inner circumference (I) of the at least one microtube (31-36) of the plurality of microtubes (31-36).

2. Optical fibre cable (1) according to claim 1, wherein the laylength (L) is at least one-hundred-and-ten millimeters, and preferably at least one-hundred-and-thirty millimeters.

3. Optical fibre cable (1) according to claim 1 or 2, wherein the aggregate cross-sectional area (C) covers at least seventy-two percent, and preferably at least seventy-five percent of the inner area (V).

4. Optical fibre cable (1) according to any one of the preceding claims, wherein the inner circumference (I) of the at least one microtube (31-36) is circular or substantially circular.

5. Optical fibre cable (1) according to claim 4, wherein the inner circumference (I) defines an inner diameter (D), wherein the inner diameter (D) of the at least one microtube (31-36) is less than or equal to 1,05 millimeters, preferably less than or equal to 1,03 millimeters, and more preferably less than or equal to 1,02 millimeters.

6. Optical fibre cable (1) according to any one of the preceding claims, wherein each optical fibre (4) of the plurality of optical fibres (4) has a fibre diameter of equal to or less than two-hundred micrometer, and preferably equal to or less than one-hundred-and-eighty micrometer.

7. Optical fibre cable (1) according to any of the preceding claims, wherein each subset (41) of optical fibres (4) comprises twenty-four or at least twenty-four optical fibres (4).

8. Optical fibre cable (1) according to any of the preceding claims, wherein the subset (41) of optical fibres (4) in the at least one microtube (31-36) are arranged in a circle packing, preferably wherein the circle packing has an orientation relative to the at least one microtube (31-36) that remains constant of substantially constant along the respective helical path (H).

9. Optical fibre cable (1) according to any of the preceding claims, wherein the plurality of microtubes (31-36) is stranded around the central element (2) using SZ stranding.

10. Method for manufacturing an optical fibre cable (1) according to any one of the preceding claims, wherein the method comprises the steps of:
- inserting the subset (41) of optical fibres (4) into the at least one microtube (31-36), wherein the aggregate cross-sectional area (C) of the subset (41) of optical fibres (4) in the at least one microtube (31-36) covers at least seventy percent of the inner area (V) enclosed by the inner circumference (I) of the at least one microtube (31-36); and
- stranding the plurality of microtubes (31-36) around a central element (2) with a laylength (L) of at least one-hundred millimeters.

11. Method according to claim 10, wherein the laylength (L) is at least one-hundred-and-ten millimeters, and preferably at least one-hundred-and-thirty millimeters.

12. Method according to claim 10 or 11, wherein the aggregate cross-sectional area (C) covers at least seventy-two percent, and preferably at least seventy-five percent of the inner area (V).

13. Method according to any one of claims 10-12, wherein the subset (41) of optical fibres (4) are untwisted or substantially untwisted relative to each other when feeding the subset (41) of optical fibres (4) into the at least one microtube (31-36).

14. Method according to any one of claims 10-13, wherein the plurality of microtubes (31-36) are stranded around the central element (2) using SZ stranding.

15. Method according to any one of claims 10-14, wherein the optical fibre cable (1) further comprises an outer sheath (5), wherein the method further comprises the step of:
- inserting the plurality of microtubes (31-36) and the central element (2) into the outer sheath (5).
